# EUROPEAN PATENT APPLICATION

(11) **EP 4 497 667 A1**
(43) Date of publication of application: **29.01.2025**
(21) Application number: 24172831.0
(22) Date of filing: 26.04.2024
(51) Int. Cl.: B62J 1/08

(54) **SADDLE RAIL CLAMP ASSEMBLY**

(30) Priority: 27.07.2023 US 202363529265 P; 09.04.2024 US 202418630374
(71) Applicant: Fox Factory, Inc., Duluth, GA 30097 (US)
(72) Inventor: Otterness, Christopher, Duluth, 30097 (US); Coaplen, Joshua, Duluth, 30097 (US)
(74) Representative: Greaves Brewster LLP

(57) **Abstract**

A saddle rail clamp assembly (400) comprising:
an upper saddle rail clamping portion (430) configured to be rotatably coupled with a housing (493), said upper saddle rail clamping portion comprising at least one opening (435) therein;
a lower saddle rail clamping portion (420) located between said upper saddle rail clamping portion (430) and said housing (493); and
a fastening system, said fastening system comprising:
an extended seatpost saddle clamp nut (810A, 810B) configured to be installed at least partially within said at least one opening (435) of said upper saddle rail clamping portion (430); and
a fastener (815A, 815B) configured to be installed at least partially within a fastener opening (495) of said housing (493), said fastener configured to be coupled with said extended seatpost saddle clamp nut (810A, 810B) to compressively couple said upper saddle rail clamping portion (430) with said lower saddle rail clamping portion (493) to retain a saddle rail therebetween, wherein said extended seatpost saddle clamp nut (810A, 810B) does not decrease a saddle bottom-to-dropper seatpost standoff distance (720), and wherein said saddle rail clamp assembly (400) minimizes a required length of said fastener (810A, 810B).

## Description

### CROSS-REFERENCE TO RELATED APPLICATIONS (PROVISIONAL)

This application claims priority from U.S. Provisional Patent Application No. 63/529,265 filed on July 27,2023 and from U.S. Utility Patent Application No. 18/630,374 filed April 9, 2024.

### FIELD OF THE INVENTION

Embodiments of the invention generally relate to a seatpost for a vehicle. Some embodiments relate to a saddle clamp assembly. Some embodiments relate to a seatpost comprising the saddle clamp. Some embodiments relate to a vehicle comprising the seatpost.

### BACKGROUND

Saddle height and saddle orientation are important parts of a vehicle (such as a bicycle, unicycle, tricycle, and the like) setup. If the saddle is too high, a rider sitting on the saddle will feel unstable. In contrast, if the saddle is too low, the rider sitting on the saddle would feel cramped. Moreover, if the saddle is pitched too far forward (or too far backward) it will cause undue discomfort for the rider. Additionally, what would be considered a good set-up for riding along a road, may not be a good set-up for climbing a hill, which may also be different than a good set-up for riding down a hill, for riding across rough terrain, etc. As such, there is no universal saddle geometry settings, instead saddle settings are at least user and use case dependent.

### SUMMARY OF THE INVENTION

According to some embodiments there is provided a saddle rail clamp assembly. The saddle rail clamp assembly may be suitable for clamping a saddle to a seatpost. The saddle rail clamp assembly may comprise an upper saddle rail clamping portion configured to be rotatably coupled with a housing. The upper saddle rail clamping portion may comprise at least one opening therein. The saddle rail clamp assembly may comprise a lower saddle rail clamping portion located between said upper saddle rail clamping portion and said housing. The saddle rail clamp assembly may comprise a fastening system. The fastening system may comprise a seatpost saddle clamp nut configured to be installed at least partially within said at least one opening of said upper saddle rail clamping portion. The fastening system may comprise a fastener configured to be installed at least partially within a fastener opening of said housing. The fastener may be configured to be coupled with said seatpost saddle clamp nut to compressively couple said upper saddle rail clamping portion with said lower saddle rail clamping portion to retain a saddle rail therebetween. The seatpost saddle clamp nut may be configured (e.g. sized and/or shaped) so that it does not decrease a saddle bottom-to-dropper seatpost standoff distance. In this way the saddle rail clamp assembly may reduce (in some aspects minimize) a required length of said fastener. In some embodiments the seatpost saddle clamp nut may comprise an extended seatpost saddle clamp nut, such as a longer seatpost saddle clamp nut.

In some embodiments said extended seatpost saddle clamp nut is configured such that at least a portion of said fastener is threadedly engaged with said extended seatpost saddle clamp nut in a region between a bottom portion of said upper saddle rail clamping portion and a top portion of said housing.

In some embodiments the saddle rail clamp assembly may not require an increase in a distance that said fastener extends into said region between said bottom portion of said upper saddle rail clamping portion and said top portion of said housing.

In some embodiments said extended seatpost saddle clamp nut and said fastener may be sufficiently threadedly engaged such that saddle clamp assembly is able to generate a required clamping force on said saddle rail. In some embodiments, an extended seatpost saddle clamp nut may ensure a minimum thread engagement across different saddle angles and across different saddle rail configurations.

In some embodiments said extended seatpost saddle clamp nut may have approximately 12 thread pitches.

In some embodiments the upper saddle rail clamping portion may comprise at least a second opening therein. The fastening system may comprise at least a second extended seatpost saddle clamp nut configured to be installed at least partially within said at least said second opening of said upper saddle rail clamping portion. The fastening system may comprise at least a second fastener configured to be installed at least partially within at least a second fastener opening of said housing. The at least a second fastener may be configured to be coupled with at least said second extended seatpost saddle clamp nut to compressively couple said upper saddle rail clamping portion with said lower saddle rail clamping portion at a second location. When the saddle rail clamp assembly is disposed at a maximum saddle angle, said first extended seatpost saddle clamp nut may provide approximately 3 pitches of threaded engagement with said first fastener within said region between said bottom portion of said upper saddle rail clamping portion and said top portion of said housing. The second extended seatpost saddle clamp nut may concurrently provide approximately 4 pitches of threaded engagement with said second fastener.

In some embodiments an adjustment to one or both of said fastener and at least said second fastener may adjust a pitch of said saddle rail clamp assembly.

In some embodiments an upper portion of said fastener opening may be wider than a remainder of said fastener opening.

In some embodiments the saddle rail clamp assembly may further comprise a geometric shape formed in a portion of said at least one opening of said upper saddle rail clamping portion. At least a portion of said extended seatpost saddle clamp nut may compris a geometric form. The geometric form may be configured to work with said geometric shape to stop a rotation of said extended seatpost saddle clamp nut, when said extended seatpost saddle clamp nut is installed at least partially within said at least one opening of said upper saddle rail clamping portion.

According to some embodiments there is provided a seatpost with head assembly. The seat post with head assembly may comprise a housing coupled to a seatpost. The housing may comprise at least one fastener opening therein. The seat post with head assembly may comprise a saddle rail clamp assembly. The saddle rail clamp assembly may comprise an upper saddle rail clamping portion configured to be rotatably coupled with said housing. The upper saddle rail clamping portion may comprise at least one opening therein. The seat post with head assembly may comprise a lower saddle rail clamping portion located between said upper saddle rail clamping portion and said housing. The seat post with head assembly may comprise a fastening system. The fastening system may comprise an extended seatpost saddle clamp nut configured to be installed at least partially within said at least one opening of said upper saddle rail clamping portion. The fastening system may comprise a fastener configured to be installed at least partially within said at least one fastener opening of said housing. The fastener may be configured to be coupled with said extended seatpost saddle clamp nut to couple said saddle rail clamp assembly with said housing and compressively couple said upper saddle rail clamping portion with said lower saddle rail clamping portion to retain a saddle rail therebetween. The extended seatpost saddle clamp nut may not decrease a saddle bottom-to-dropper seatpost standoff distance. The saddle rail clamp assembly may minimize a required length of said fastener.

In some embodiments said seatpost may comprise a lower post having an inner diameter (ID), said lower post for insertion into a seat tube of a vehicle. The seatpost may comprise an upper post having an outer diameter (OD) smaller than said ID of said lower post, said upper post to telescopically slide within said lower post to form a dropper seatpost. The housing may be coupled to one end of said upper post.

In some embodiments the housing may be fixedly coupled with said seatpost.

In some embodiments the upper saddle rail clamping portion may comprise at least a second opening therein. The fastening system may comprise at least a second extended seatpost saddle clamp nut configured to be installed at least partially within said at least said second opening of said upper saddle rail clamping portion. The seatpost may further comprise at least a second fastener configured to be installed at least partially within at least a second fastener opening of said housing. The at least a second fastener may be configured to be coupled with at least said second extended seatpost saddle clamp nut to compressively couple said upper saddle rail clamping portion with said lower saddle rail clamping portion at a second location.

In some embodiments an upper portion of said fastener opening may be wider than a remainder of said fastener opening.

In some embodiments the seatpost with head assembly may further comprise a geometric shape formed in a portion of said at least one opening of said upper saddle rail clamping portion. The seat post with head assembly may further comprise at least a portion of said extended seatpost saddle clamp nut comprising a geometric form. The geometric form may be configured to work with said geometric shape to stop a rotation of said extended seatpost saddle clamp nut, when said extended seatpost saddle clamp nut is installed at least partially within said at least one opening of said upper saddle rail clamping portion.

According to some embodiments there is provided an assembly. The assembly may comprise a lower post having an inner diameter (ID), said lower post for insertion into a seat tube of a vehicle. The assembly may comprise an upper post having an outer diameter (OD) smaller than said ID of said lower post, said upper post to telescopically slide within said lower post to form a dropper seatpost. The assembly may comprise a housing fixedly coupled to one end of said upper post, said housing comprising a plurality of openings therein. The assembly may comprise a saddle rail clamp assembly to couple at least one saddle rail of a saddle with said dropper seatpost. The saddle rail clamp assembly may comprise an upper saddle rail clamping portion configured to be rotatably coupled with a housing. The upper saddle rail clamping portion may comprise a plurality of openings therein. The saddle rail clamp assembly may comprise a lower saddle rail clamping portion located between said upper saddle rail clamping portion and said housing. The saddle rail clamp assembly may comprise a fastening system. The fastening system may comprise at least one extended seatpost saddle clamp nut configured to be installed at least partially within at least one of said plurality of openings of said upper saddle rail clamping portion. The saddle rail clamp assembly may comprise at least one fastener configured to be installed at least partially within each of said plurality of said fastener opening of said housing. The at least one fastener may be configured to be coupled with said at least one extended seatpost saddle clamp nut to couple said saddle rail clamp assembly with said housing and compressively couple said upper saddle rail clamping portion with said lower saddle rail clamping portion to retain a saddle rail therebetween. The at least one extended seatpost saddle clamp nut does may not decrease a saddle bottom-to-dropper seatpost standoff distance. The saddle rail clamp assembly may minimizes a required length of said at least one fastener.

In some embodiments an upper portion of said fastener opening is wider than a remainder of said fastener opening.

In some embodiments the assembly may further comprise a geometric shape formed in a portion of said at least one opening of said upper saddle rail clamping portion. At least a portion of said extended seatpost saddle clamp nut may comprise a geometric form. The geometric form is configured to work with said geometric shape to stop a rotation of said at least one extended seatpost saddle clamp nut. The at least one extended seatpost saddle clamp nut may be installed at least partially within said at least one opening of said upper saddle rail clamping portion.

In some embodiments the assembly may further comprise at least a second extended seatpost saddle clamp nut configured to be installed at least partially within said at least a second of said plurality of opening of said upper saddle rail clamping portion. The assembly may comprise at least a second fastener configured to be coupled with at least said second extended seatpost saddle clamp nut to compressively couple said upper saddle rail clamping portion with said lower saddle rail clamping portion at a second location.

In some embodiments an adjustment to one or both of said at least one fastener and at least said second fastener adjusts a pitch of said saddle rail clamp assembly.

According to some embodiments there is provided a vehicle comprising a saddle rail clamp assembly as set out above, or as described or as claimed anywhere herein. According to some embodiments there is provided a vehicle comprising a seatpost with head assembly as set out above, or as described or as claimed anywhere herein. According to some embodiments there is provided a vehicle comprising an assembly as set out above, or as described or as claimed anywhere herein. In any of these aspects the vehicle may take the form of a bicycle, e-bike, motorized bicycle, unicycle, tricycle, boat, or any type of vehicle that uses a saddle configuration.

With dropper seatposts there is a desire to keep total axial length as short as possible while preserving axial drop. One major way to do this is to utilize drop clamps. With drop clamps the bike saddle moves closer to the upper side of the top clamp and to the clamp fasteners. When articulating the seatpost through different saddle angles the bolts can extend closer to the bottom of the bike saddle. For the safety of the rider clearance is required between the contacting the fasteners with the bottom of the saddle. This required clearance limits the amount of axial drop that can be achieved from drop clamps. On the other hand, a minimal thread engagement is required between the fastener and the nut. Designing an intentionally longer nut ensures that minimal thread engagement is available across differing saddle rail configurations (7mm diameter and 7x9mm obround saddle rails) and saddle angle ranges. This minimum thread engagement achieved ensures that the protruding fastener length above the highest most portion of the saddle clamp is minimized. This maximizes drop clamp clearances and therefore maximizes potential axial length reductions.

In some embodiments providing intentionally long nuts ensures minimum thread engagement with the clamp fasteners across different saddle angles and across different saddle rail configurations.

Throughout the description and claims of this specification, the words "comprise" and "contain" and variations of the words, for example "comprising" and "comprises", mean "including but not limited to", and do not exclude other components, integers or steps. Moreover the singular encompasses the plural unless the context otherwise requires: in particular, where the indefinite article is used, the specification is to be understood as contemplating plurality as well as singularity, unless the context requires otherwise.

Preferred features of each aspect of the invention may be as described in connection with any of the other aspects. Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible.

### BRIEF DESCRIPTION OF THE DRAWINGS

Aspects of the present invention are illustrated by way of example, and not by way of limitation, in the accompanying drawings, wherein:
Figure 1 is a perspective view of a bicycle, in accordance with an embodiment.
Figure 2 is a perspective view of a handlebar with a set of control levers coupled therewith, in accordance with an embodiment.
Figure 3 is a perspective view of a dropper seatpost coupled with a saddle clamp assembly, in accordance with an embodiment.
Figure 4 is a perspective view of a plurality of different positions for the dropper seatpost, in accordance with an embodiment.
Figure 5 is a perspective comparison illustrating the difference in dead length between a conventional seatpost and the reduced dead length dropper seatpost, in accordance with an embodiment.
Figure 6 is a perspective view of a saddle, in accordance with an embodiment.
Figure 7 is a side view of the saddle clamp assembly with extended seatpost saddle clamp nut coupled with a saddle, in accordance with an embodiment.
Figure 8A is a side cross-section view of the saddle clamp assembly with extended seatpost saddle clamp nut in a nose up saddle angle configuration, in accordance with an embodiment.
Figure 8B is a side cross-section view of the saddle clamp assembly with extended seatpost saddle clamp nut in a nose down saddle angle configuration, in accordance with an embodiment.
Figure 9 is a side cross-section view of the seatpost saddle clamp nut and retainer portion of the saddle clamp assembly, in accordance with an embodiment.

The drawings referred to in this description should be understood as not being drawn to scale except if specifically noted.

### DETAILED DESCRIPTION

The detailed description set forth below in connection with the appended drawings is intended as a description of various embodiments of the present invention and is not intended to represent the only embodiments in which the present invention is to be practiced. Each embodiment described in this disclosure is provided merely as an example or illustration of the present invention, and should not necessarily be construed as preferred or advantageous over other embodiments. In some instances, well known methods, procedures, and objects have not been described in detail as not to unnecessarily obscure aspects of the present disclosure.

### TERMINOLOGY

In the following discussion, a number of terms and directional language is utilized. Although the technology described herein is useful on a number of vehicles that have an adjustable saddle, a bicycle will be used to provide guidance for the terms and directional language.

The term "seat tube" refers to a portion of a frame to which a dropper seatpost is attached.

In general, a bicycle has a front (e.g., the general location of the handlebars and the front wheel) and a rear (e.g., the general location of the rear wheel). For purposes of the discussion the front and rear of the bicycle can be considered to be in a first plane. A second plane that is perpendicular to the first plane would be similar to an exemplary flat plane of the ground upon which the bicycle is ridden.

In the following discussion, the pitch of the saddle refers to the exemplary horizontal plane drawn from the front of the saddle to the back of the saddle. For example, if the saddle is mounted to the dropper seatpost head with a zero-degree pitch, the front of the saddle and the back of the saddle would rudimentarily be in a horizontal plane having a parallel orientation with the exemplary flat plane of the ground as described above.

An upward pitch of the saddle would occur when the saddle rotates about the dropper seatpost head such that the front of the saddle is higher (e.g., further from the ground plane) while the rear of the saddle is lower (e.g., closer to the ground plane). In an upward pitch scenario, the saddle plane would no longer be parallel with the flat plane of the ground but would instead intersect the ground plane at some location aft of the dropper seatpost head.

In contrast, a downward pitch of the saddle would occur when the saddle rotates about the dropper seatpost head such that the front of the saddle is lower (e.g., closer to the ground plane) while the rear of the saddle is higher (e.g., further from the ground plane). In a downward pitch scenario, the saddle plane would no longer be parallel with the flat plane of the ground but would instead intersect the ground plane at some location forward of the dropper seatpost head.

### OVERVIEW

The following discussion provides a novel solution for a dropper seatpost head drop clamp type assembly that keeps a total axial length as short as possible while preserving axial drop. In one embodiment, utilizing drop clamps allows the bike saddle moves closer to the upper side of the top clamp and to the clamp fasteners. When articulating the seatpost through different saddle angles the bolts can extend closer to the bottom of the bike saddle. For the safety of the rider clearance is required between the contacting the fasteners with the bottom of the saddle. This required clearance limits the amount of axial drop that can be achieved from drop clamps. On the other hand, a minimal thread engagement is required between the fastener and the nut.

Embodiments described herein utilize an intentionally longer nut in conjunction with the drop clamp style configuration to ensure minimal thread engagement is available across differing saddle rail configurations (e.g., 7mm diameter and 7x9mm round saddle rails, etc.) and saddle angle ranges. In one embodiment, this minimum thread engagement achieved ensures that the protruding fastener length above the highest most portion of the saddle clamp is minimized. This maximizes drop clamp clearances and therefore maximizes potential axial length reductions.

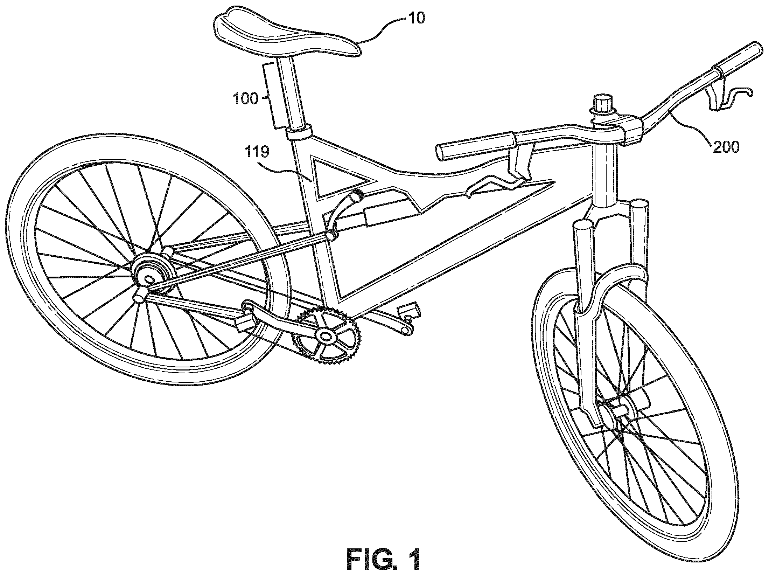

Referring now to Figure 1, a bicycle is shown in accordance with an embodiment. In general, the bicycle includes pedals, wheels, a chain or other drive mechanism, brakes, an optional suspension, a saddle 10 (or bicycle seat), a handlebars 200, a seatpost 100, and a bicycle frame 119. In general, seatpost 100 is a tube that extends upwards from the bicycle frame 119 to the saddle 10. The amount that seatpost 100 extends out of the frame can usually be adjusted. Seatpost 100 may be made of various materials, such as, but not limited to being, the following: steel, aluminum, titanium, carbon fiber, and aluminum wrapped in carbon fiber. In one embodiment, seatpost 100 is a dropper seatpost (such as dropper seatpost 300). In one embodiment, seatpost 100 is not a dropper seatpost.

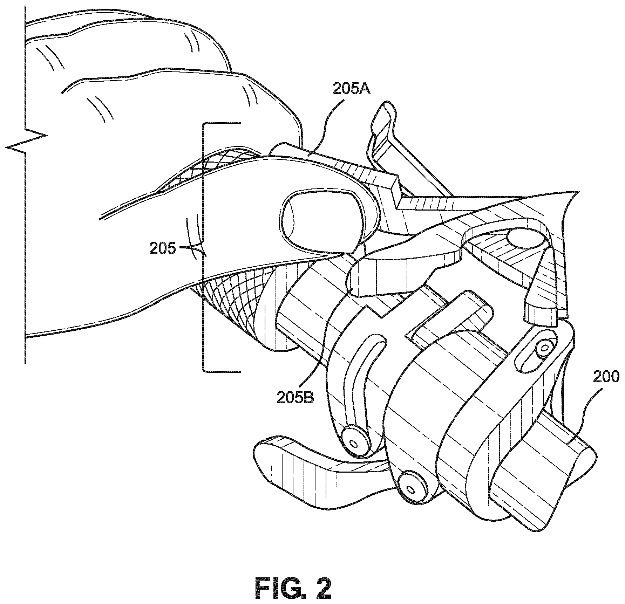

Figure 2 depicts a handlebar 200 with a set of control levers 205 coupled therewith, according to an embodiment. The set of control levers 205 is a type of user interface with which the user employs for communicating dropper seatpost height instructions to the dropper seatpost. Of note, the set of control levers 205 is used herein to describe various embodiments. However, it should be understood that the term, "user interface" may be substituted for the set of control levers 205, in various embodiments. It should also be appreciated that the user interface may be at least, but not limited to, any of the following components capable of communicating with the dropper seatpost: wireless device, power meter, heart rate monitor, voice activation device, GPS device having stored map, graphical user interface, button, dial, smart phone (e.g., iPhone^{™}), and lever).

The set of control levers 205 includes at least one control lever, such as the first control lever 205A and may include a second control lever 205B, it should be understood that in an embodiment, there may be only a single control lever, or in an embodiment there may be a set of control levers. For simplicity, 205 will be referred to as a set of control levers. The set of control levers 205 are mechanically and/or electronically connected (via wire/cable and/or wirelessly) to various components within the dropper seatpost. When the cyclist moves the set of control levers 205, via the connections between the set of control levers 205 and the dropper seatpost, he is causing a cam within the dropper seatpost to shift positions. The shifting cam, in turn, moves against valves, causing the valves within a valve system to open and/or close. This opening and/or closing of the valves control the fluid movement through and surrounding the valve system.

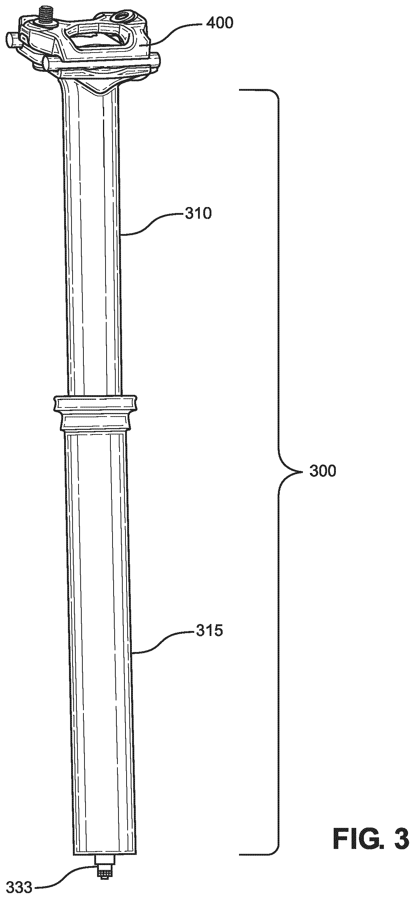

Figure 3 is a perspective view of a dropper seatpost 300 coupled with a saddle clamp assembly 400. In one embodiment, the dropper seatpost 300 includes an upper post 310 and a lower post 315 within which the upper post 310 telescopically slides upon actuation of a handlebar lever, such as the set of control levers 205 shown in Figure 2. In one embodiment, the dropper seatpost 300 includes an air valve 333 which is used to adjust the air pressure within dropper seatpost 300.

In one embodiment, saddle clamp assembly 400 is coupled with a regular seatpost 100. In the following discussion, the dropper seatpost 300 with saddle clamp assembly 400 is used as the example seatpost embodiment as the dropper seatpost discussion also covers a non-dropper seatpost. However, it should be appreciated that in one embodiment saddle clamp assembly 400 is coupled with a regular seatpost 100 (as shown in Figure 1).

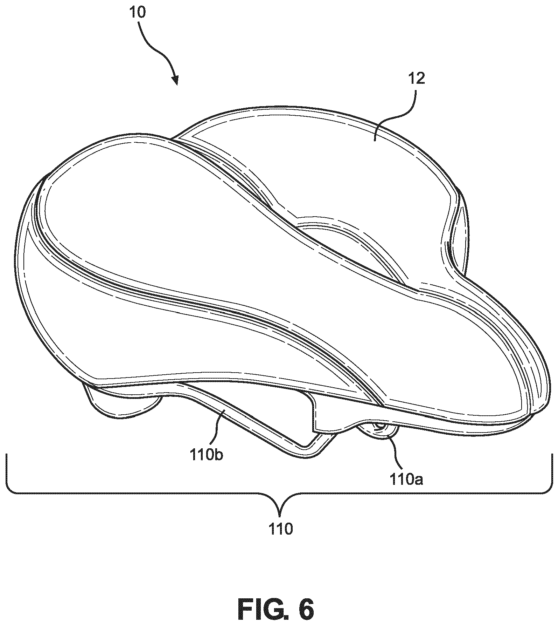

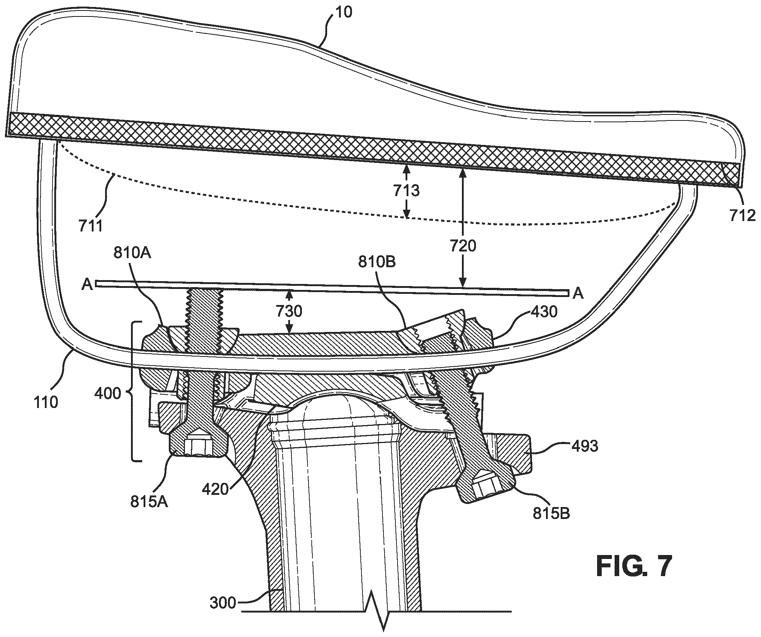

In one embodiment, saddle clamp assembly 400 is a two clamp dropper seatpost having two fasteners to maintain a clamping force between the upper clamp and lower clamp to hold onto saddle rails 110 (shown in Figures 6 and 7). In addition, the two fasteners are used to adjust the pitch of the saddle 10, e.g., nose-up or nose-down. Further, saddle clamp assembly 400 is able to accommodate different seat-tube angles, different saddles, and different saddle pitch angles. As stated herein, the saddle pitch adjustment is important for personal rider preferences, different seat-tube angles, different saddle designs, and the like.

In one embodiment, dropper seatpost 300 and at least part of saddle clamp assembly 400 are formed as a single component. In another embodiment, dropper seatpost 300 and saddle clamp assembly 400 consist of two or more distinct and/or different components. Further, dropper seatpost 300 and saddle clamp assembly 400 are formed of the same materials, formed of different materials, etc. The materials include a group of materials such as, but not limited to, a metal, a composite, a combination of both metal and composite parts within each part, and the like. The metal options include, but are not limited to, steel, aluminum, titanium, and the like. The composite materials include carbon-based composites, plastics, and the like.

For example, an aluminum saddle clamp assembly 400 and an aluminum dropper seatpost 300, a titanium saddle clamp assembly 400 and a carbon dropper seatpost 300, a carbon saddle clamp assembly 400 and a titanium dropper seatpost 300, a carbon saddle clamp assembly 400 and a steel dropper seatpost 300, etc. Similarly, there can be other materials utilized such as carbon/metal mix (amalgamation, etc.) For example, saddle clamp assembly 400 consist of a carbon body with metal inserts, etc.

Additional details regarding the operation of a dropper seatpost assembly is found in US patent 9,422,018 entitled "Seatpost" which is assigned to the assignee of the present application, and which is incorporated herein by reference in its entirety.

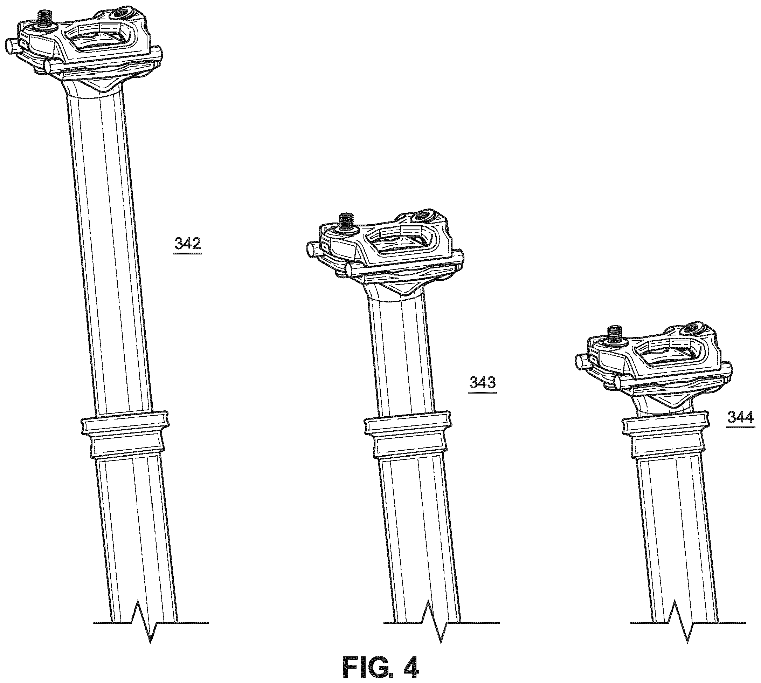

Figure 4 is a perspective view of a plurality of different positions for dropper seatpost 300 shown in accordance with one embodiment. In Figure 4, dropper seatpost 342 is shown in full extension, dropper seatpost 343 is shown in partial extension, and dropper seatpost 344 is shown in full compression. In one embodiment, the dropper seatpost can be remotely shortened (lowered) using a control lever positioned on the bicycle's handlebar (as shown and described in Figure 2).

On technical sections of a trail, a rider may cause the dropper seatpost to lower by triggering the actuating lever on the handlebar while the rider also depresses the saddle. Typically, the actuating lever of a dropper seatpost will open a valve or latch in the dropper seatpost so that the dropper seatpost can move up or down. In one embodiment, dropper seatposts have an air spring (mechanical spring, or the like) and use the rider's weight to move them down, and will only raise themselves when the valve or latch internal to the dropper seatpost is opened (via handlebar remote). In one embodiment, dropper seatposts are "micro-adjustable". There are two types of microadjustable dropper seatposts: (1) dropper seatposts that can be continuously adjusted to an infinite number of positions; and (2) dropper seatposts that can only be adjusted to a predetermined (preprogrammed) number of positions.

For example, with regard to dropper seatpost that can only be adjusted to a preprogrammed number of positions, the dropper seatpost adjustment positions may be that of the following three positions: up; middle; and down. Generally, the rider prefers that the dropper seatpost be in the "up" position during a ride over flat terrain, a road surface, or pedaling up small hills on a road surface. The rider generally prefers that the dropper seatpost be in the "middle" position when the rider still wants a small amount of power through pedaling but yet would still like the saddle to be at least partially out of the way. This situation may occur while riding down a gentle hill or when the rider anticipates having to climb a hill immediately after a short decent. The rider generally prefers that the dropper seatpost be in the "down" position when the rider is descending a steep hillside. In this situation, the rider would be positioned rearward of the saddle and essentially be in a mostly standing position. By doing such, the rider changes his center of gravity to be rearward of the bicycle and lower, thereby accomplishing a more stable and safer riding position. Additionally, since the saddle is lowered, it is not positioned in the riders' chest area, contributing to a safer ride.

Some mountain bikers prefer that the infinitely adjustable dropper seatpost be installed on their mountain bikes, enabling them to adjust their saddle at any given moment to any given terrain detail.

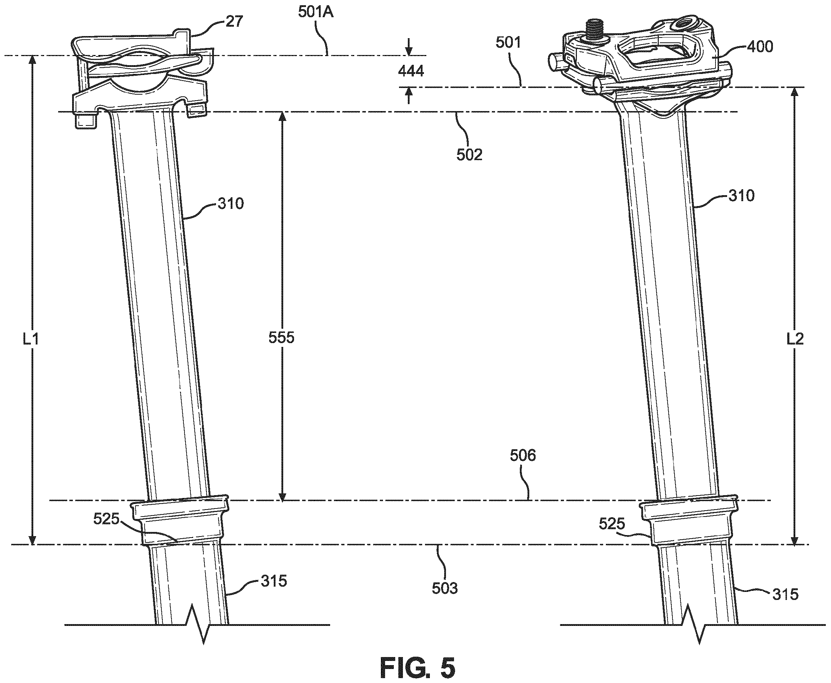

Figure 5 is a perspective comparison view showing the difference in dead length between a conventional dropper seatpost clamp setup 27 and the reduced dead length dropper seatpost with saddle clamp assembly 400, in accordance with an embodiment. As discussed in Figures 1-4, dropper seatpost 300 is a height adjustable dropper seatpost that can be raised or lowered based on a user selection at a handlebar (or other location).

In general, the overall manufacturing goal is to build a dropper seatpost 300 having saddle clamp assembly 400 with the most stroke for the lowest effective length. As shown in Figure 5, the upper post 310 of the dropper seatpost goes into the lower post 315 of the dropper seatpost. The stroke 555 is the exposed amount of the upper post 310 of the dropper seatpost 300. In general, the stroke 555 is the distance from the line 506 indicative of the top of lower post 315 to the line 502 indicative of the bottom of the saddle clamp.

The effective length (L1 and L2 respectively) is the length between the center axis (501 and 501A respectively) of the saddle rail and the bottom of whatever the largest diameter portion of the lower portion that stops in the seat tube (referred to herein as "seat tube collar 525") and shown by line 503.

During installation, the seat tube collar 525 is the lowest portion of the dropper seatpost 300 that is visible after it is installed into the bike frame 119 seat tube. In one embodiment, the working length on a dropper seatpost is identified by the total travel distance or stroke 555. The dead length is the effective length of the dropper seatpost 300 in its dropped (or fully compressed) position. In other words, the distance between the center axis of the saddle rails and the bottom of the seat tube collar 525 when stroke 555 is reduced to effectively 0mm in length. In one embodiment, the goal is to minimize the dead length.

In the conventional dropper seatpost clamp setup 27, the dead length is the distance between the center axis 501A of the saddle rails and the bottom of the seat tube collar 525 (identified by line 503), which is the effective length L1 minus the stroke 555. In contrast, in the dropper seatpost 300 having saddle clamp assembly 400, the dead length is the distance between the center axis 501 of the saddle rails and bottom of the seat tube collar 525 (identified by line 503), which is the effective length L2 minus the stroke 555. As can be seen in Figure 5, the difference in the two dead lengths is distance 444. That is, the dead length of dropper seatpost 300 having saddle clamp assembly 400 is distance 444 less than the dead length of conventional dropper seatpost clamp setup 27.

As shown in the comparison of Figure 5, embodiments described herein, reduce the distance from the center axis (501 and 501A respectively) of the saddle rails to the seat tube collar 525, e.g., reduce the dead length, by altering the shape of the lower saddle rail clamping portion 420 and the upper saddle rail clamping portion 430. In one embodiment, the dead length is additionally reduced by the change in the shape and/or orientation of clamping fasteners for the saddle clamp assembly 400.

For example, a rider wants to use a dropper seatpost 300 having a 150 mm stroke 555. However, when the dropper seatpost 300 is at its most dropped position, there is still an amount of dead length (e.g., 20 mm). Further, the dead length is added to the travel length which means that at its fully extended position the dropper seatpost will be 170 mm above the seat tube on the bike frame 119. In addition, there is also the size of the saddle 10 from the saddle rails 110 to the top of the saddle padded portion 12 (e.g., 30 mm). Thus, a rider wanting to use a dropper seat having a 150 mm stroke 555 may have a top of the saddle at 200 mm (150 mm travel + 20 mm dead length + 30 mm saddle height) above the seat tube. In some cases, this total distance of 200 mm will cause the rider to no longer be able to reach the pedals or be in a non-desired riding configuration. As such, the rider would have to use a shorter dropper seatpost having only a 100 mm total stroke.

As can be seen in the comparison provided in Figure 5, the difference in dead length distance between the conventional dropper seatpost clamp setup 27 and saddle clamp assembly 400 is reduced by measurement 444. That is, in conventional dropper seatpost clamp setup 27 the center axis 501A of the saddle rail clamp is at a first distance L1. In contrast, the center axis 501 of saddle clamp assembly 400 (with the same stroke 555) is at a lesser distance L2. This occurs due to the modification of the shape of lower saddle rail clamping portion 420 and upper saddle rail clamping portion 430 of the saddle clamp assembly 400.

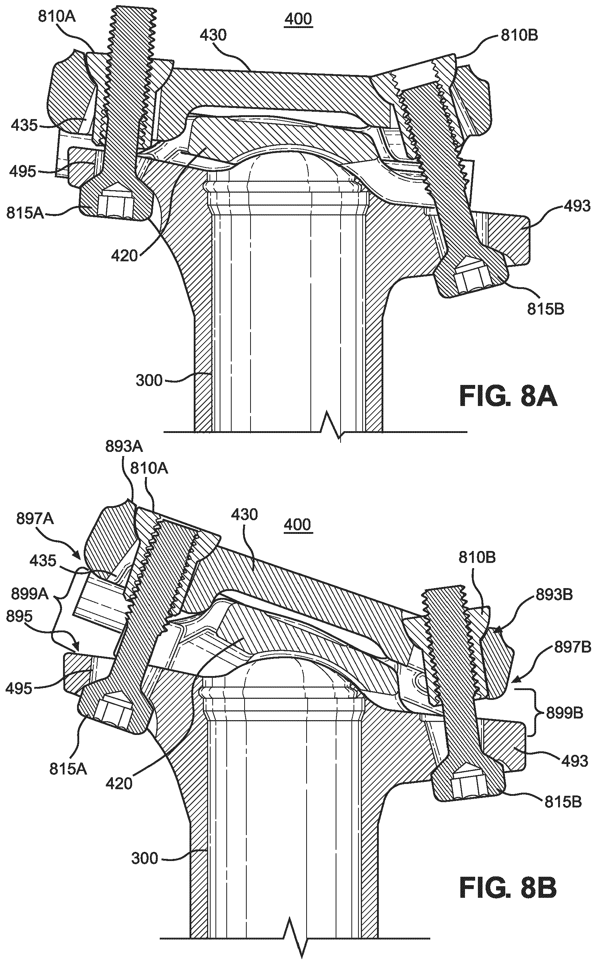

In one embodiment, the lower saddle rail clamping portion 420 has been modified to "droop" down so that the distance between the lower saddle rail clamping portion 420 (when clamped) to the seat tube collar 525 (e.g., the dead length) is reduced. In other words, the dead length is reduced due to the altering of the shape of the lower saddle rail clamping portion 420 and upper saddle rail clamping portion 430, while the stroke 555, dropper seatpost 300 shape, and dropper seatpost 300 internals remain unchanged. The unchanged aspects would include one or both of fasteners 805a and 805b still facing from the bottom to the top (as shown in Figure 8A and 8B).

Figure 6 illustrates an embodiment of a saddle 10 including a padded portion 12 for sitting, a first saddle rail 110A, and a second saddle rail 110b (collectively "saddle rails 110"). The saddle 10 is for any vehicle that uses a saddle configuration such as, but not limited to, a bicycle, e-bike, motorized bicycle, unicycle, tricycle, boat, or any type of vehicle that uses a saddle configuration. However, for purposes of clarity, the following discussion will utilize a bicycle for explanatory purposes.

Figure 7 is a side view of the saddle clamp assembly 400 coupled with a saddle 10, in accordance with an embodiment. Saddle clamp assembly 400 includes lower saddle rail clamping portion 420, upper saddle rail clamping portion 430, fasteners 815a and 815b, and extended seatpost saddle clamp nuts 810a and 810b.

In one embodiment, a housing 493 is removably coupled with seatpost 300 (or seatpost 100). In one embodiment, housing 493 is fixedly coupled with the seatpost 300 (or seatpost 100) during manufacture. In one embodiment, housing 493 and the seatpost 100 are formed as a single component. In one embodiment, housing 493 and the upper post of dropper seatpost 300 are formed as a single component.

In one embodiment, housing 493 is formed from the same material as seatpost 300, lower saddle rail clamping portion 420, and upper saddle rail clamping portion 430. In one embodiment, housing 493 is formed from a different material than one, some, or all of seatpost 300, lower saddle rail clamping portion 420, and upper saddle rail clamping portion 430. E.g., materials such as, but not limited to, a metal, a composite, a combination of both metal and composite parts within each part, and the like. The metal options include, but are not limited to, steel, aluminum, titanium, and the like. The composite materials include carbon-based composites, plastics, and the like.

In one embodiment, saddle 10 includes saddle rails 110 and saddle bottom 712. In one embodiment, saddle bottom 712 has a build in saddle flex 713 with a max flex range 711 (as indicated by broken line). In one embodiment, although the dead length is reduced by the modification of the lower saddle rail clamping portion 420 and the upper saddle rail clamping portion 430, e.g., the droop; the lowering of the lower saddle rail clamping portion 420 and the upper saddle rail clamping portion 430 will also reduce the distance between the bottom of the saddle and the top of the saddle rail clamp assembly (hereinafter "saddle bottom-to-dropper seatpost standoff distance 720"). In one embodiment, the saddle bottom-to-dropper seatpost standoff distance 720 changes with the pitch setting when the bolt configuration remains in an upward direction (such as shown in Figures 8A-8B). In such an embodiment, the range of saddle flex 713 (e.g., an amount of flex built into the saddle 10 for performance, comfort, etc.) is mechanically reduced when a portion of a fastener, such as fastener 815a (due to pitch adjustment of saddle 10) sticks up far enough to reduce the saddle bottom-to-dropper seatpost standoff distance 720.

In general, if the saddle bottom-to-dropper seatpost standoff distance 720 is less than the range of saddle flex 713, it is possible that a flex of the saddle 10 will result in contact with the highest point in the saddle clamp assembly 400 causing a hard stop of the saddle 10. This hard stop would be jarring, would reduce the advantages provided by the saddle flex 713, and if the contact is made with a fastener, it would also provide a lot of force in a very small area which could cause saddle damage, fastener damage, unintentional pitch adjustment, location focused jarring to the rider, and the like. For example, if the saddle flex 713 is 15 mm, then the saddle bottom-to-dropper seatpost standoff distance 720 would have to be greater than 15 mm.

In one embodiment, the axis A-A is based on the highest projection of the dropper seatpost body closest to the saddle bottom 712 and in one embodiment occurs at the highest nose up saddle angle and shown as distance 730. In one embodiment, the maximum axis A-A distance 730 is used as a standardized measurement to ensure the saddle bottom-to-dropper seatpost standoff distance 720 remains greater than or equal to the maximum saddle flex 713.

With reference now to Figure 8A, a side cross-section view of the drop clamp style saddle clamp assembly 400 with extended seatpost saddle clamp nuts 810a and 810b in a nose up saddle angle configuration is shown in accordance with an embodiment. Figure 8B is a side cross-section view of the drop clamp style saddle clamp assembly 400 with extended seatpost saddle clamp nuts 810a and 810b in a nose down saddle angle configuration, in accordance with an embodiment.

Housing 493 includes at least one opening 495. The opening 495 could be a slit (or U-shaped) opening, a hole, or the like. In one embodiment, housing 493 includes two openings 495. Upper saddle rail clamping portion 430 includes at least one opening 435. The opening 435 could be a slit (or U-shaped) opening, a hole, or the like. In one embodiment, upper saddle rail clamping portion 430 includes two openings 435.

When assembled, lower saddle rail clamping portion 420 of saddle clamp assembly 400 is rotatably positioned with respect to housing 493. Upper saddle rail clamping portion 430 is placed above the lower saddle rail clamping portion 420 and housing 493 and is also rotatably positioned with respect to housing 493.

In one embodiment, (e.g., when there is only one opening 435 and/or opening 495) one side of the upper saddle rail clamping portion 430 is adjustably coupled with housing 493 such as with an adjustable clip, link, or the like. The other side will have an extended seatpost saddle clamp nut 810a located at least partially within openings 435 of upper saddle rail clamping portion 430 and fastener 815a located at least partially within openings 495 of housing 493. Fastener 815a will be coupled with extended seatpost saddle clamp nut 810a such that upper saddle rail clamping portion 430 is removably and/or adjustably coupled with housing 493.

In one embodiment, extended seatpost saddle clamp nuts 810a and 810b are located at least partially within openings 435 of upper saddle rail clamping portion 430. Fasteners 815a and 815b are located at least partially within openings 495 of housing 435 and fasteners 815a and 815b are coupled with extended seatpost saddle clamp nuts 810a and 810b, respectively, such that upper saddle rail clamping portion 430 is removably and/or adjustably coupled with housing 493.

In basic operation, the fasteners 815a and 815b are adjustably coupled with extended seatpost saddle clamp nuts 810a and 810b to retain the saddle clamp assembly 400 with housing 493 and compressively couple the upper saddle rail clamping portion 430 with the lower saddle rail clamping portion 420 to retain the saddle rails 110 therebetween. Moreover, by adjusting the installed length of the fasteners 815a and 815b with extended seatpost saddle clamp nuts 810a and 810b respectively, the pitch of the saddle clamp assembly 400 (and thus saddle 10) is adjustable with respect to the housing 493 (and thus seatpost 300).

In one embodiment, both of the saddle clamp nuts are extended seatpost saddle clamp nuts 810a and 810b. In one embodiment, only one of the saddle clamp nuts is an extended seatpost saddle clamp nut.

In one embodiment, saddle clamp assembly 400 includes fasteners 815a and 815b. In one embodiment, fasteners 815a and 815b are upward fasteners that will be coupled with the extended seatpost saddle clamp nuts 810a and 810b to securely couple the saddle rails 110 of saddle 10 with the seatpost 300 via the saddle clamp assembly 400.

In one embodiment, the projection of the upward fasteners 815a and 815b out of the extended seatpost saddle clamp nuts 810a and 810b reaches a maximum height in the nose up saddle angle configuration of Figure 8A (also shown in Figure 7).

In one embodiment, fasteners 815a and 815b are bolts. In one embodiment, fasteners 815a and 815b are threaded screws, wingnuts, or the like.

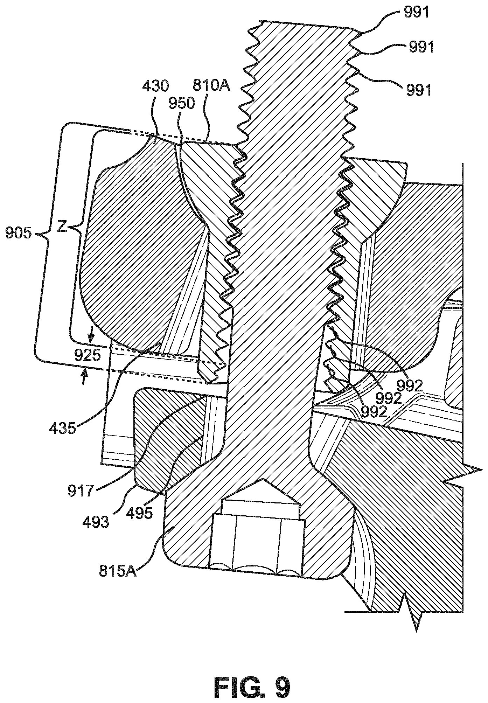

Referring now to Figure 9, a side cross-section view of the extended seatpost saddle clamp nut 810a, fastener 815a, and a portion of the drop clamp style saddle clamp assembly 400 is shown in accordance with an embodiment.

In Figure 9, a portion of the upper rail saddle clamping portion 430 is partially shown. Previous to the present embodiments, it was understood that the length of the seatpost saddle clamp nut would be less than or approximately equal to the width z of the upper rail saddle clamping portion 430. In one embodiment, this length ensured no negative interactions (e.g., binding, etc.) between the bottom of the seatpost saddle clamp nut and the housing 493 and/or any other portions of the drop clamp style saddle clamp assembly.

In one embodiment, the upper portion 917 of fastener opening 495 has been widened such that there are no negative interactions (e.g., binding, contact, rubbing, etc.) between the lower portions of extended seatpost saddle clamp nut 810a and the housing 493 and/or any other portions of the drop clamp style saddle clamp assembly 400.

In one embodiment, the extended seatpost saddle clamp nut 810a has a geometric shape that works in conjunction with the shape of the upper portion 950 of clamp nut opening 435 to stop the extended seatpost saddle clamp nut 810a from rotating once it is placed within clamp nut opening 435.

For example, in one embodiment, the extended seatpost saddle clamp nut 810a has at least one flat surface that mates with a flat surface of the upper portion 950 of clamp nut opening 435, thereby stopping the extended seatpost saddle clamp nut 810a from rotating once it is placed within clamp nut opening 950. As such, fastener 815a can be tightened or loosened with respect to the extended seatpost saddle clamp nut 810a without requiring the user to grasp or otherwise control the extended seatpost saddle clamp nut 810a.

Various embodiments of the present invention, as depicted clearly in Figure 9, increase the length 905 of extended seatpost saddle clamp nuts 810a and 810b. As a result, the present embodiments advantageously make use of the region between the bottom of upper saddle post clamp 430 and the top of head of seatpost 300. The present embodiments are also able to maximize the saddle bottom-to-dropper seatpost standoff distance 720 (of Figure 7). Further, extended seatpost saddle clamp nuts 810a and 810b of the present embodiments enable maximizing the saddle bottom-to-dropper seatpost standoff distance 720 while minimizing the required length of fasteners 815a and 815b. Moreover, embodiments of the present invention beneficially maximize the distance 720 (i.e., does not decrease distance 720) while also minimizing the required length of fasteners 815a and 815b. These benefits are obtained by the present embodiments for all saddle angle rail configurations (e.g., 7mm diameter and 7x9mm round saddle rails, etc.) and for all saddle angles.

In addition to beneficially maximizing distance 720, embodiments of the present invention, simultaneously ensure sufficient threaded coupling between extended seatpost saddle clamp nuts 810a and 810b and fasteners 815a and 815b, respectively. For purposes of the present application, sufficient threaded coupling means that at least a minimum number of the external threads, typically shown as 991 in Figure 9, on each of fasteners 815a and 815b are engaged with (i.e., threadedly mated to) the internal threads, typically shown as 992 in Figure 9, of extended seatpost saddle clamp nuts 810a and 810b, respectively, to ensure that saddle clamp assembly 400 is able to generate a required clamping force to saddle rails 110.

With reference now to Figure 8B, as stated above, embodiments of the present invention achieve the aforementioned increased threaded engagement or threaded coupling by utilizing extended seatpost saddle clamp nuts 810a and 810b and fasteners 815a and 815b, respectively. Also, at least a portion of the increased threaded engagement occurs in the regions, typically shown as 899a and 899b. It should be noted that regions 899a and 899b are defined as the regions between a bottom portion, typically shown as 897a and 897b, of upper saddle post clamp 430 and a portion of the top surface 895 of housing 493. Hence, extended seatpost saddle clamp nuts 810a and 810b provide increased threaded engagement or threaded coupling with fasteners 815a and 815b, respectively, without requiring an increase in the distance that fasteners 815a and 815b extend into region 730 of Figure 7. That is, the present extended seatpost saddle clamp nuts 810a and 810b provide increased threaded engagement with fasteners 815a and 815b, respectively, without requiring any additional extension, compared to previous solutions, of fasteners 815a and 815b above surfaces 893a and 893b, respectively. Furthermore, extended seatpost saddle clamp nuts 810a and 810b provide the above-described increased threaded engagement or threaded coupling with fasteners 815a and 815b, respectively, regardless of the saddle angle rail configuration or saddle angle. Stated differently, the increased length of extended seatpost saddle clamp nuts 810a and 810b, makes it possible to achieve sufficient threaded coupling while using the shortest possible length for fasteners 815a and 815b.

In one embodiment of the present invention, extended seatpost saddle clamp nuts 810a and 810b have a length which is increased approximately 1.5 times the length of prior solutions. In one embodiment, extended seatpost saddle clamp nuts 810a and 810b each have approximately an additional 4.5 more thread pitches compared to previous solutions such that said extended seatpost saddle clamp nuts 810a and 810b each have approximately 12 thread pitches. Additionally, in one embodiment of the present invention, a first of extended seatpost saddle clamp nuts 810a and 810b will provide approximately 3 pitches of threaded engagement with a respective first of fasteners 815a and 815b (depending upon the saddle angle) within a respective one of regions 897a and 897b. Moreover, in such embodiment, the second of extended seatpost saddle clamp nuts 810a and 810b will concurrently enable approximately 4 pitches of threaded engagement with the second of fasteners 815a and 815b.

In one embodiment, the correlating geometric shape of extended seatpost saddle clamp nut 810a and the upper portion 950 of clamp nut opening 435 is a star, half-moon, octagon, hexagon, square, triangle, or the like.

In one embodiment, the extended seatpost saddle clamp nut 810a is used in conjunction with the drop clamp style saddle clamp assembly 400 configuration to ensure minimal thread engagement is available across a wider range of saddle rail configurations (e.g., 7mm diameter and 7x9mm round saddle rails, etc.) and saddle angle ranges than was previously possible. In one embodiment, this minimum, but sufficient thread engagement ensures that the protruding fastener 815a length above the highest most portion of the saddle clamp is minimized. This maximizes drop clamp clearances and therefore maximizes potential axial length reductions.

The foregoing Description of Embodiments is not intended to be exhaustive or to limit the embodiments to the precise form described. Instead, example embodiments in this Description of Embodiments have been presented in order to enable persons of skill in the art to make and use embodiments of the described subject matter. Moreover, various embodiments have been described in various combinations. However, any two or more embodiments can be combined. Although some embodiments have been described in a language specific to structural features and/or methodological acts, it is to be understood that the subject matter defined in the appended claims is not necessarily limited to the specific features or acts described above. Rather, the specific features and acts described above are disclosed by way of illustration and as example forms of implementing the claims and their equivalents.

## Claims

1. A saddle rail clamp assembly comprising:
an upper saddle rail clamping portion configured to be rotatably coupled with a housing, said upper saddle rail clamping portion comprising at least one opening therein;
a lower saddle rail clamping portion located between said upper saddle rail clamping portion and said housing; and
a fastening system, said fastening system comprising:
an extended seatpost saddle clamp nut configured to be installed at least partially within said at least one opening of said upper saddle rail clamping portion; and
a fastener configured to be installed at least partially within a fastener opening of said housing, said fastener configured to be coupled with said extended seatpost saddle clamp nut to compressively couple said upper saddle rail clamping portion with said lower saddle rail clamping portion to retain a saddle rail therebetween, wherein said extended seatpost saddle clamp nut does not decrease a saddle bottom-to-dropper seatpost standoff distance, and wherein said saddle rail clamp assembly reduces a required length of said fastener.

2. The saddle rail clamp assembly of Claim 1, wherein said extended seatpost saddle clamp nut is configured such that at least a portion of said fastener is threadedly engaged with said extended seatpost saddle clamp nut in a region between a bottom portion of said upper saddle rail clamping portion and a top portion of said housing.

3. The saddle rail clamp assembly of Claim 1 or 2, wherein said saddle rail clamp assembly does not require an increase in a distance that said fastener extends into said region between said bottom portion of said upper saddle rail clamping portion and said top portion of said housing.

4. The saddle rail clamp assembly of Claim 1, 2 or 3, wherein said extended seatpost saddle clamp nut and said fastener are sufficiently threadedly engaged such that the saddle clamp assembly is able to generate a required clamping force on said saddle rail.

5. The saddle rail clamp assembly of any preceding Claim, wherein said extended seatpost saddle clamp nut has approximately 12 thread pitches.

6. The saddle rail clamp assembly of any preceding Claim, further comprising:
said upper saddle rail clamping portion comprising at least a second opening therein; and
said fastening system further comprising:
at least a second extended seatpost saddle clamp nut configured to be installed at least partially within said at least said second opening of said upper saddle rail clamping portion; and
at least a second fastener configured to be installed at least partially within at least a second fastener opening of said housing, at least said second fastener configured to be coupled with at least said second extended seatpost saddle clamp nut to compressively couple said upper saddle rail clamping portion with said lower saddle rail clamping portion at a second location.

7. The saddle rail clamp assembly of Claim 6, wherein, when said saddle rail clamp assembly is disposed at a maximum saddle angle, said first extended seatpost saddle clamp nut provides approximately 3 pitches of threaded engagement with said first fastener within said region between said bottom portion of said upper saddle rail clamping portion and said top portion of said housing, and wherein said second extended seatpost saddle clamp nut concurrently provides approximately 4 pitches of threaded engagement with said second fastener.

8. The saddle rail clamp assembly of Claim 6 or 7, wherein an adjustment to one or both of said fastener and at least said second fastener adjusts a pitch of said saddle rail clamp assembly.

9. The saddle rail clamp assembly of any preceding Claim, wherein an upper portion of said fastener opening is wider than a remainder of said fastener opening.

10. The saddle rail clamp assembly of any preceding Claim, further comprising:
a geometric shape formed in a portion of said at least one opening of said upper saddle rail clamping portion; and
at least a portion of said extended seatpost saddle clamp nut comprising a geometric form, wherein said geometric form is configured to work with said geometric shape to stop a rotation of said extended seatpost saddle clamp nut, when said extended seatpost saddle clamp nut is installed at least partially within said at least one opening of said upper saddle rail clamping portion.

11. A seatpost with head assembly comprising:
a housing coupled to a seatpost comprising at least one fastener opening therein; and
a saddle rail clamp assembly as claimed in any preceding Claim coupled to said housing.

12. The seatpost with head assembly of Claim 11, wherein said seatpost comprises:
a lower post having an inner diameter (ID), said lower post for insertion into a seat tube of a vehicle;
an upper post having an outer diameter (OD) smaller than said ID of said lower post, said upper post to telescopically slide within said lower post to form a dropper seatpost; and
said housing coupled to one end of said upper post.

13. The seatpost with head assembly of Claim 11 or 12, wherein said housing is fixedly coupled with said seatpost.

14. The seatpost with head assembly of Claim 11, 12 or 13, wherein said housing comprises a plurality of fastener openings therein.

15. A vehicle comprising a seatpost with head assembly as claimed in any of Claims 11 to 14, and optionally wherein said vehicle comprises any one of: a bicycle, an e-bike, a motorized bicycle, a unicycle, a tricycle, a boat, or any type of vehicle that uses a saddle configuration.
